# FASCICULE DE BREVET EUROPEEN

(11) **EP 0 527 688 B1**
(45) Date de publication et mention de la délivrance du brevet: **30.10.1996**
(21) Numéro de dépôt: 92402280.9
(22) Date de dépôt: 13.08.1992
(51) Int. Cl.: C08F 255/02, C08F 10/00, C08F 8/46

(54) **Procédé pour le greffage dans la ligne d'acides et anhydrides d'acides carboxyliques à insaturation éthylénique sur des homopolymères ou copolymères de l'éthylène et installation pour la mise en oeuvre de ce procédé**
Verfahren zum Pfropfen in-Linie von ethylenisch ungesättigten Carbonsäuren und -säureanhydriden auf Homo- oder Kopolymere von Ethylen und Vorrichtung für die Verwendung des Verfahrens
Process for grafting ethylenically unsaturated carboxylic acids and acid anhydrides onto homo- or copolymers of ethylene on-line and installation for use of the process

(30) Priorité: 14.08.1991 FR 9110327
(43) Date de publication de la demande: 17.02.1993
(73) Titulaire: ECP ENICHEM POLYMERES FRANCE, F-92411 Courbevoie (FR)
(72) Inventeur: Audureau, Joel, F-62290 Noeux-Les-Mines (FR); Mehalla, Hacene, F-62400 Essars (FR); Pellerin, Thierry, F-62300 Lens (FR)
(74) Mandataire: Chaillot, Geneviève

(56) Documents cités:
- EP-A- 0 116 797
- EP-A- 0 272 512
- CA-A- 1 161 196
- DD-A- 117 077

## Description

La présente invention porte sur un procédé pour le greffage, sur des homopolymères ou copolymères de l'éthylène, de monomères choisis parmi les acides carboxyliques à insaturation éthylénique, les anhydrides d'acides correspondants, et les dérivés de ces acides et anhydrides d'acides. Ce procédé présente la particularité que les monomères de greffage sont injectés dans la ligne de production en continu de l'homopolymère ou du copolymère de l'éthylène, plus précisément entre la sortie du réacteur de polymérisation et le dispositif d'extrusion du polymère précédant le dispositif de granulation. L'invention concerne également une installation pour la mise en oeuvre de ce procédé.

Les homo- et copolymères vrais de l'éthylène copolymérisé avec les monomères indiqués ci-dessus sont bien connus ; ils sont utilisés notamment dans la fabrication d'adhésifs, en tant que revêtements ou sous la forme de mélanges avec d'autres polymères, par exemple des polyoléfines.

Pour certaines applications, il est cependant souhaitable de pouvoir disposer d'un copolymère greffé plutôt que d'un copolymère vrai. Il est connu en effet que les propriétés des polyoléfines peuvent être modifiées par le greffage d'un acide ou anhydride d'acide carboxylique à insaturation éthylénique. Un procédé pour le greffage de monomères insaturés sur des homopolymères de l'éthylène et des copolymères de l'éthylène et d'α-oléfines supérieures en C₄-C₁₀ est décrit, par exemple, dans le brevet américain US-A-4 612 155 ; ainsi, dans le cas de la fabrication d'adhésifs, pour une teneur identique en monomères de type acides ou anhydrides d'acides carboxyliques, l'adhésivité est meilleure, au moins dans le cas des teneurs relativement faibles.

On connaît également l'utilisation, dans des films stratifiés, de copolymères de l'éthylène à greffage d'acide ou anhydride carboxylique à insaturation éthylénique, par exemple, par la demande de brevet européen EP-A-0 160 984, le copolymère de l'éthylène étant dans ce cas un copolymère éthylène-acrylate d'alkyle.

D'une manière générale, il est important, dans le greffage de monomères sur des polymères, d'obtenir un produit homogène. Si le procédé de greffage n'est pas conduit d'une manière homogène, le produit résultant peut manifester des propriétés variables et inacceptables, en particulier en ce qui concerne l'adhérence à d'autres matières. De plus, il est important de pouvoir greffer des monomères sur des polymères sans provoquer de changements majeurs des propriétés physiques des polymères.

Pour satisfaire cet objectif, il a été proposé, conformément à la demande de brevet européen EP-A-0 266 994, de greffer des acides ou anhydrides d'acides dicarboxyliques à insaturation éthylénique ou leurs dérivés sur un copolymère de l'éthylène avec au moins un monomère choisi parmi les alcanoates de vinyle, les (méth)acrylates d'alkyle, l'acide (méth)acrylique et le monoxyde de carbone ; ou sur un ionomère d'un tel copolymère contenant de l'acide (méth)acrylique, ce procédé consistant, de façon générale, à :
(i) former un mélange du copolymère, du monomère et de 25-3000 ppm d'un peroxyde organique ayant une demi-vie d'environ 1-120 minutes à 150°C, et mélanger de façon à obtenir une distribution uniforme du monomère et du peroxyde dans le copolymère ;
(ii) malaxer le mélange résultant dans une extrudeuse à une température supérieure au point de fusion dudit copolymère pendant une période de temps qui est d'au moins quatre fois la demi-vie du peroxyde organique ; et
(iii) extruder le copolymère greffé résultant en un article façonné, généralement constitué par des pastilles ou d'autres formes finement divisées, qui peuvent être utilisées telles quelles ou en mélange avec d'autres polymères, en particulier, sous la forme de compositions adhésives destinées à être utilisées avec des polymères et/ou des métaux, dans la coextrusion de structures à couches multiples, dans des compositions de revêtement, comme compatibilisants, dans des compositions chargées et pour améliorer l'aptitude des polymères à recevoir une coloration et une teinture.

Un tel greffage en extrudeuse a cependant les inconvénients qu'une reprise d'un polymère en granulés pour le refondre est nécessaire, ce qui représente une perte d'énergie, et que, lors de cette reprise de granulés, le mélange des granulés fondus et du monomère de greffage s'effectue en présence d'oxygène, ce qui entraîne un risque de réticulation du copolymère greffé.

Il est indiqué, dans le brevet de RDA n° 117 077 qu'une réaction de greffage conduite dans un dispositif monté immédiatement après le réacteur (séparateur moyenne pression ou séparateur basse pression) est désavantageux car il se forme une grande quantité d'homopolymère ou de copolymère du composant de greffage, et que l'on ne peut pas préparer de copolymères ayant une quantité élevée de chaînes latérales greffées. Pour pallier cet inconvénient, on propose, selon ce brevet, d'introduire le monomère de greffage ou bien dans une deuxième zone du réacteur de polymérisation, ou bien dans un récipient haute ou basse pression de l'unité de polymérisation, par exemple un réacteur agité ou une machine d'extraction. Cependant, il est indiqué que cette deuxième possibilité n'est intéressante que si l'on utilise des monomères de greffage qui, lors d'un greffage conduit dans le réacteur de polymérisation, chargeraient le gaz de recyclage et nécessiteraient une purification coûteuse du gaz de recyclage. Ces monomères sont le maléimide, l'acétate de vinyle ou l'acrylate d'éthyle. Il est préconisé d'introduire l'anhydride maléique, qui ne fait pas partie de cette liste, dans la deuxième zone du réacteur de polymérisation. Ceci est confirmé par l'Exemple 4 qui décrit l'obtention d'un copolymère éthylène-acétate de vinyle greffé par l'anhydride maléique. Toutefois, la teneur de 6,8% en poids d'anhydride maléique annoncée ne se rapporte vraisemblablement pas aux greffons seuls, une partie de l'anhydride maléique étant copolymérisée sous forme de copolymère vrai avec l'éthylène et l'acétate de vinyle.

En résumé, l'injection du monomère de greffage dans le réacteur conduit en partie à une copolymérisation vraie, non recherchée, dudit monomère, et l'injection en aval du réacteur n'est pas préconisée pour l'anhydride maléique comme monomère de greffage.

La Société Déposante a cherché à mettre au point un procédé qui ne présente pas les inconvénients rappelés ci-dessus des techniques antérieures, et qui présente l'avantage complémentaire de permettre de s'affranchir des dispositifs mettant en jeu des éléments mécaniques en mouvement, tels que les agitateurs des réacteurs agités ou les vis d'extrudeuses.

A cet effet, il est proposé, selon l'invention, dans un procédé de polymérisation ou de copolymérisation de l'éthylène sous haute pression, comportant au moins deux étages de séparation en aval du réacteur de polymérisation, d'introduire le (ou les) monomère(s) de greffage, dans la ligne, au niveau de la ou d'au moins une zone de détente présente dans l'installation. Ainsi, dans le cas où celle-ci comporte un séparateur moyenne pression et un séparateur basse pression et où l'injection du (ou des) monomère(s) de greffage est effectuée au niveau de la zone de détente située entre les deux, il apparaît qu'à l'entrée du séparateur basse pression, le (co)polymère contient encore environ 10-15% d'éthylène et le cas échéant de comonomère(s) n'ayant pas réagi, mais que, de façon surprenante, malgré la présence de cette teneur élevée en monomère(s) de départ, il n'y a pas de copolymérisation éthylène-monomère de greffage à l'entrée de la vanne de détente du séparateur moyenne pression.

Par rapport au greffage conduit en extrudeuse, le procédé de la présente invention présente un avantage économique en raison de l'absence d'une opération de reprise d'un polymère granulé à refondre, d'où un gain d'énergie, et un avantage technique car le mélange dans la ligne est exempt d'oxygène, ce qui supprime le risque de réticulation du copolymère.

La présente invention a donc pour objet un procédé de production en continu d'un homopolymère de l'éthylène ou d'un copolymère de l'éthylène et d'au moins un monomère A, ledit homopolymère ou copolymère étant modifié par greffage d'au moins un monomère B choisi parmi les acides carboxyliques à insaturation éthylénique, leurs anhydrides et autres dérivés, caractérisé par le fait que :
- dans un premier stade, on conduit la polymérisation de l'éthylène ou la copolymérisation vraie de l'éthylène et du (ou des) monomère(s) A, en présence d'au moins un amorceur de (co)polymérisation vraie et, le cas échéant, des additifs usuels, dans au moins une zone de réaction (R) maintenue sous une haute pression HP, à une température comprise entre 150° et 320°C ;
- dans un second stade,
   - ou bien on achemine le produit de réaction dans une zone de séparation (S), maintenue sous une pression intermédiaire P, dans laquelle le (co)polymère formé est séparé, à l'état fondu, d'avec le (ou les) (co)monomère(s) n'ayant pas réagi ;
   - ou bien on achemine le produit de réaction dans une première zone de séparation (S1), maintenue sous une pression intermédiaire P1, dans laquelle le (co)polymère formé est séparé, à l'état fondu, d'avec le (ou les) (co)monomère(s) n'ayant pas réagi ; puis on achemine le (co)polymère obtenu dans une deuxième zone de séparation (S2), maintenue sous une pression intermédiaire P2 < P1, dans laquelle le (co)polymère à l'état fondu, issu de la zone (S1), est séparé d'avec le (ou les) (co)monomère(s) n'ayant pas réagi ; et
- dans un troisième stade, on achemine le (co)polymère obtenu dans une zone de séparation finale (SF), maintenue sous une basse pression BP, dans laquelle le (co)polymère est séparé d'avec les gaz résiduels,
des zones de détente appropriées (D), (D1) et (D2) étant aménagées sur le trajet du (co)polymère entre les zones respectivement (S) et (SF), (S1) et (S2), et (S2) et(SF), le (ou les) monomère(s) B, le cas échéant dissous dans un solvant ou en suspension dans un milieu de dispersion, étant introduits dans la ligne, sur le trajet du (co)polymère, en au moins un point se situant au niveau de la zone de détente (D) ou en au moins un point se situant au niveau d'au moins une zone de détente (D1, D2), le greffage étant par ailleurs conduit, le cas échéant, en présence d'au moins un initiateur de greffage.

Conformément à un mode de réalisation préféré du procédé de la présente invention, on injecte le flux constitué par ou comprenant le (ou les) monomère(s) B en amont de la zone de détente considérée (D ; D1 ; D2), entre le point de détente associé et la sortie de la zone de séparation située juste en amont de celui-ci. Dans le cas où la zone de détente comporte une vanne à pointeau, on peut considérer que le point de détente correspond à la région du pointeau ; pour des raisons de montage technique, l'arrivée du flux de monomère(s) de greffage (B) s'effectuera au moins à une petite distance dudit pointeau.

Conformément à un autre mode de réalisation du procédé selon l'invention, on injecte le flux constitué par ou comprenant le (ou les) monomère(s) B en aval de la zone de détente considérée (D ; D1 ; D2), au voisinage du point de détente associé. Par cette dernière expression, on entend que l'arrivée du flux de monomère(s) de greffage s'effectue dans une région relativement proche du point de détente considéré.

Selon l'invention, on conduit avantageusement le premier stade sous une pression HP d'environ 400 à 3000 bars, le second stade, sous une pression P d'environ 50 à 500 bars, ou sous une pression P1 d'environ 100 à 500 bars puis sous une pression P2 d'environ 10 à 70 bars, et le troisième stade, sous une pression BP d'environ 0,5 à 10 bars, avec la condition que la valeur de BP soit inférieure à la valeur de P2.

Par ailleurs, on conduit le second et le troisième stade à une température comprise avantageusement entre 150 et 300°C.

Selon l'invention, on utilise notamment comme monomère(s) A, une alpha-oléfine en C₃-C₁₀, par exemple le propylène, le butène-1, le méthyl-4 pentène-1, l'hexène-1, l'octène-1, permettant de conduire à des copolymères de l'éthylène par voie Ziegler, ou bien un alcanoate de vinyle, tel que l'acétate de vinyle ; un (méth)acrylate d'alkyle en C₁-C₁₂, tel que l'acrylate d'éthyle, l'acrylate de méthyle, l'acrylate de butyle, le méthacrylate de méthyle ; l'acide (méth)acrylique ; et le monoxyde de carbone, permettant de conduire à des copolymères polaires de l'éthylène par voie radicalaire.

L'amorceur de (co)polymérisation est un initiateur de radicaux libres, tel qu'un peroxyde, un perester, un hydroperoxyde, dans la (co)polymérisation radicalaire de l'éthylène ; ou bien un système catalytique de type Ziegler comprenant notamment au moins un halogénure de métal de transition et un activateur organométallique, dans le cas de la (co)polymérisation ionique éthylène-α-oléfine.

Comme monomère(s) B, on utilise avantageusement l'acide (méth)acrylique, l'acide maléique, l'acide fumarique, l'acide itaconique, l'acide crotonique, l'anhydride itaconique, l'anhydride maléique ou un anhydride maléique substitué, comme l'anhydride diméthyl maléique, ou encore un sel, amide, imide ou ester d'un acide carboxylique à insaturation éthylénique, comme le maléate mono- et disodique, l'acrylamide, le maléimide et le fumarate de diéthyle ; on utilise notamment l'anhydride maléique.

De préférence, on introduit le (ou les) monomère(s) B à l'état dissous dans au moins un solvant choisi parmi le carbonate d'éthylène, le carbonate de propylène, le carbonate de diéthyle et les esters d'acides gras et d'alcools lourds tels que les acétates de butyle, d'hexyle, d'octyle, ou à l'état dispersé dans un milieu de dispersion, tel que le polyhexène ou une cire ou graisse de polyoléfine, en particulier de polyéthylène, éventuellement avec au moins un solvant. Le rapport en poids monomère(s) B/solvant est avantageusement compris entre 0,5/1 et 1,5/1, de préférence, la concentration la plus élevée possible permise par le pouvoir solvant du solvant choisi et la température. Le rapport en poids monomère(s) B/ milieu de dispersion est avantageusement compris entre 1/1 et 4/1. Par ailleurs, le flux constitué par ou comprenant le (ou les) monomère(s) B est chauffé de façon à faciliter son injection dans la ligne à une température suffisante mais inférieure à celle qui provoquerait la décomposition de l'initiateur pouvant être utilisé conjointement. On peut utiliser, pour ce flux, une température comprise, par exemple, entre 100 et 140°C.

On utilise avantageusement, comme initiateur de greffage, un peroxyde et/ou un perester tel que le peroxyde de dicumyle ou le peroxyde de ditertiobutyle, le perbenzoate de butyle tertiaire, ou le 2,5-diméthyl 2,5-(ditertiobutylperoxy) hexane ou bien un composé diazoïque.

On introduit le (ou les) initiateur(s) de greffage dans le flux du (ou des) monomère(s) B injecté dans la ligne de production, et/ou de façon séparée, également dans la ligne, notamment en amont ou bien avantageusement en aval du ou d'au moins le premier point d'injection du (ou des) monomère(s) de greffage B. Dans ce dernier cas, ces initiateurs sont en solution ou en dispersion dans un milieu approprié, pouvant être un milieu polymère.

Selon la présente invention, on peut également conduire le greffage d'au moins un monomère B tel que défini ci-dessus sur un copolymère de l'éthylène et d'au moins une alpha-oléfine, préparé en présence d'un système catalytique de type Ziegler, et modifié par mise en présence du copolymère ainsi obtenu avec au moins un initiateur de radicaux libres, notamment à raison de 0,01 à 1 millimole par kg dudit copolymère. De tels initiateurs de radicaux libres peuvent être choisis parmi :
- les composés peroxygénés comme les peroxydes (par exemple, le peroxyde de ditertiobutyle), les peresters et les hydroperoxydes ;
- le benzopinacol ;
- les composés diazoïques, tels que les 2,2'-azo-bis(acyloxyalcanes), comme le 2,2'-azo-bis(acétoxy-butane), le 2,2'-azo-bis(acétoxyisobutane), le 2,2'-azo-bis(propionoxypropane), le 2,2'-azo-bis(2-acétoxy-4-méthylpentane) ou le 1,1'-azo-bis(1-formyloxycyclohexane) ; et
- les hydrocarbures possédant des liaisons carbone-carbone labiles, tels que, par exemple, des diaryldialkylalcanes, comme le 2,3-diphényl-2,3-diméthylbutane (couramment désigné sous l'appellation biscumyle) ou le 3,4-diphényl-3,4-diméthylhexane.
Des détails concernant ces copolymères ainsi modifiés, leur procédé d'obtention, le choix des initiateurs de radicaux libres, et le temps de mise en contact du copolymère avec ceux-ci, etc. seront trouvés dans les demandes de brevets européens EP-A-0 083 521 et EP-A-0 231 699. Les copolymères de l'éthylène et d'au moins une α-oléfine ayant de 3 à 12 atomes de carbone, comprenant de 0,5 à 10% en moles de motifs dérivés de ladite α-oléfine, modifiés selon EP-A-0 083 521, sont caractérisés par le fait que leur viscosité limite mesurée est comprise entre 1,5 et 10 fois leur viscosité limite calculée à partir de la distribution des masses moléculaires ; quant aux compositions de polymères selon EP-A-0 231 699, elles contiennent : a) de 90 à 99,8% en poids d'au moins un polymère modifié de l'éthylène et, le cas échéant, d'au moins une α-oléfine en C₃-C₁₂, ledit polymère contenant au moins 80% en moles de motifs dérivés de l'éthylène et, b) de 0,2 à 10% en poids d'au moins une phase polymérique comprenant au moins un polymère contenant au moins 90% en moles de motifs dérivés d'au moins une α-oléfine en C₃-C₁₂ et au plus 10% en moles de motifs dérivés de l'éthylène, lesdites compositions ayant une viscosité limite mesurée comprise entre 1,5 et 100 fois leur viscosité limite calculée à partir de la distribution des masses moléculaires.

Par ailleurs, le (ou les) initiateur(s) de radicaux libres introduits en vue de cette modification peuvent se trouver en solution dans un solvant ou en suspension dans un milieu de dispersion du type de ceux indiqués ci-dessus, ou encore dans une phase polymérique constituée notamment par de l'éthylène et/ou du comonomère A polymérisé (à titre d'exemple, une phase polymérique comprenant au moins 90% en moles de motifs dérivés d'au moins une α-oléfine en C₃-C₁₂ et au plus 10% en moles de motifs dérivés de l'éthylène est décrite dans EP-A-0 231 699).

Dans le cadre de la présente invention, ces initiateurs sont introduits dans la ligne, sur le trajet du (co)polymère, en au moins un point compris entre la (ou les) dernière(s) zone(s) réactionnelle(s) d'un réacteur à plusieurs zones ou dans le dernier réacteur d'un ensemble de réacteurs branchés en série et la sortie de la zone de transformation par extrusion et granulation, qui fait généralement suite à la zone de séparation finale et dans laquelle sont effectuées une extrusion puis une granulation du (co)polymère visé. On peut également incorporer ces initiateurs de radicaux libres par malaxage avec les granulés du (co)polymère greffé final.

Par ailleurs, on utilise notamment un rapport massique initiateur(s) de greffage/monomère(s) B pouvant aller jusqu'à 1, de préférence compris entre 0 et 0,5, et une teneur massique en monomère(s) B injecté(s) de 0,05 à 2 parties pour 100 parties du copolymère, de préférence de 0,1 à 1,5 partie.

Selon l'invention, on met en oeuvre le (ou les) monomère(s) A à raison notamment de 0,1 à 90% en moles par rapport à la somme éthylène + monomère(s) A, par exemple 0,1 à 10% en moles lors de la fabrication des copolymères polaires, et par exemple 2 à 90% en moles lors de la fabrication des copolymères d'éthylène et d'α-oléfine(s).

La présente invention porte également sur une installation pour la mise en oeuvre du procédé tel que défini ci-dessus, caractérisée par le fait qu'elle comprend, en série :
- au moins un réacteur (R) de polymérisation sous haute pression, autoclave ou tubulaire ;
- un séparateur (S) apte à fonctionner sous une pression intermédiaire P ou bien deux séparateurs (S1 ; S2) en série, aptes à fonctionner sous des pressions intermédiaires respectivement P1 et P2, avec P2 < P1 ;
- un séparateur final (SF) basse pression ;
- une extrudeuse (10); et
- un dispositif granulation,
des conduites (1; 4; 14) de (co)polymère reliant le réacteur (R) et les séparateurs (S ; S1 ; S2 ; SF), des vannes de détente (2; 5; 15), par exemple à pointeau, étant disposées sur les sorties respectivement du réacteur (R) et des séparateurs (S ; S1 ; S2) séparant les (co)monomère(s) n'ayant pas réagi d'avec le (co)polymère formé ; au moins une conduite (6; 16) d'injection du flux constitué par ou comprenant le (ou les) monomère(s) de greffage B et, le cas échéant, au moins un initiateur de greffage, débouchant dans la ligne, dans la ou une zone de détente comportant la vanne de détente associée (2; 5; 15); le cas échéant, au moins une conduite d'injection séparée dans la ligne, du (ou des) initiateurs de greffage, de préférence en aval du ou d'au moins le premier point d'injection du (ou des) monomère(s) de greffage B ; le cas échéant, au moins une conduite d'injection séparée dans la ligne, d'au moins un initiateur de radicaux libres en vue de la modification d'un copolymère éthylène-α-oléfine préparé par catalyse Ziegler dans la zone de réaction, en au moins un point compris entre la (ou les) dernière(s) zone(s) réactionnelle(s) d'un réacteur à plusieurs zones ou dans le dernier réacteur d'un ensemble de réacteurs branchés en série et la sortie du dispositif de granulation ; des moyens de pompage (7) étant prévus sur la (ou les) conduite(s) (6; 16) pour l'injection du flux de monomère(s) de greffage, et sur la (ou les) conduite(s) pour l'injection séparée, si elle est prévue, du (ou des) initiateur(s) de greffage, et/ou du (ou des) initiateur(s) de radicaux libres en vue de la modification précitée.

Les copolymères greffés obtenus conformément à la présente invention trouvent application notamment pour constituer des masses de moulage par injection, pour former des films utilisables dans les domaines de l'hygiène, de l'agriculture, de la surgélation, etc.

Pour mieux illustrer l'objet de la présente invention, on va en décrire ci-après plusieurs exemples de réalisation, en référence aux dessins annexés, sur lesquels :
- les Figures 1 et 2 représentent chacune de façon schématique une installation pour la mise en oeuvre du procédé selon la présente invention ; et
- la Figure 3 est un schéma d'une vanne à pointeau pour effectuer chaque détente dans les installations précitées, montrant un montage possible de la conduite d'injection du (ou des) monomère(s) de greffage.

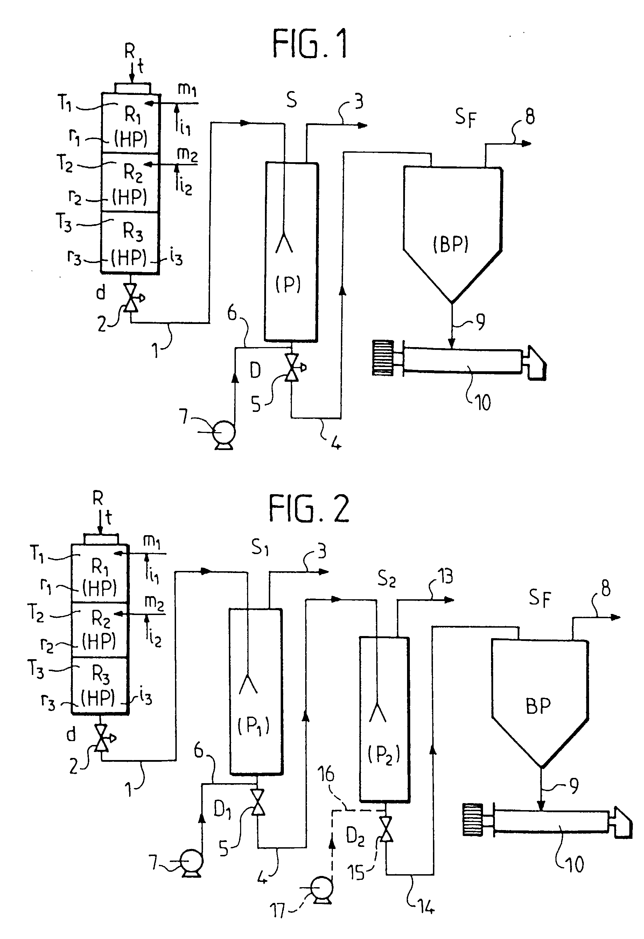

Si l'on se réfère à la Figure 1, on voit que l'on a représenté une unité de fabrication d'un polymère ou copolymère greffé de l'éthylène.

Le réacteur autoclave dans lequel a lieu la polymérisation de l'éthylène ou la copolymérisation de l'éthylène avec au moins un monomère A est désigné dans son ensemble par R ; il consiste en un récipient allongé, disposé verticalement, à montage en trois zones superposées, fonctionnant sous haute pression HP. Les deux premières zones R1 et R2 sont dotées d'un injecteur concentrique, et la troisième, R3, d'un injecteur simple. La régulation de température s'effectue en trois points r1, r2 et r3, la température étant prise aux points T1, T2 et T3. Le mélange gazeux éthylène-monomère(s) A, contenant, le cas échéant, un agent de transfert tel que l'hydrogène, utilisé à raison notamment de jusqu'à 2% en volume, de façon à régler l'indice de fluidité du (co)polymère obtenu, est injecté aux points t, m1, et m2. Un amorceur de polymérisation approprié est injecté en i1, i2 et i3, de façon connue en soi et de manière à maintenir la température de copolymérisation à la valeur choisie.

Le (co)polymère sortant de la zone de réaction R est adressé, par un conduit 1, à un dispositif de séparation S, constitué par un récipient allongé, disposé verticalement, maintenu sous une pression intermédiaire P, une vanne de détente à pointeau 2 étant disposée sur la conduite 1.

Dans le séparateur S, le mélange réactionnel est débarrassé des monomères n'ayant pas réagi, lesquels sortent en partie haute par la conduite 3 et sont, de façon connue, recyclés, par exemple, à l'entrée d'un hypercompresseur monté entre le compresseur devant comprimer la charge d'alimentation et le réacteur R, comme décrit dans le brevet canadien CA-A-1 161 196.

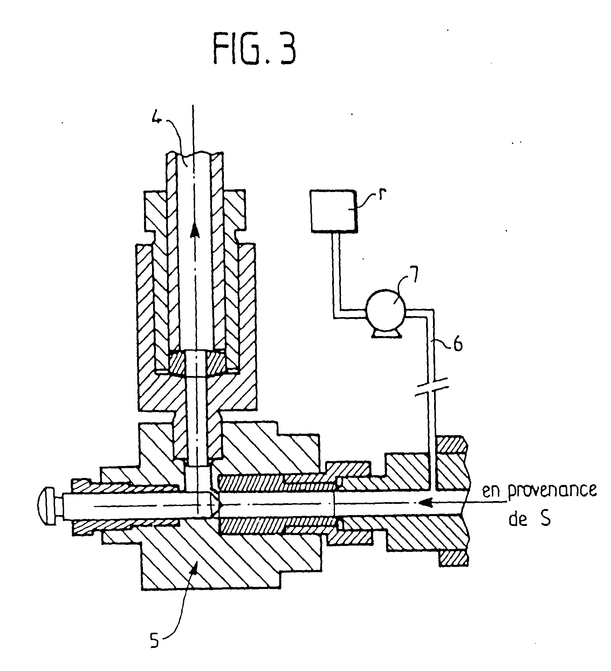

De la même façon que précédemment, le flux riche en (co)polymère sortant de la zone de séparation S est adressé, par un conduit 4, au dispositif de séparation finale SF, de type trémie fonctionnant sous une basse pression BP. Sur le conduit 4, est également interposée une vanne de détente à pointeau 5. En un point situé avant le pointeau de cette vanne de détente 5, est prévue l'injection, par la conduite 6, d'une solution contenue dans un réservoir r, avantageusement chauffée, de monomère(s) de greffage B/initiateur de greffage/solvant, par l'intermédiaire d'une pompe haute pression 7 (Figure 3). Comme pompe 7, on peut choisir une pompe volumétrique alternative avec réglage continu du débit, ou bien une pompe à engrenages.

Les gaz résiduels sortant par la conduite 8 de la trémie basse pression SF peuvent être recyclés en étant adressés au compresseur (non représenté) ; quant au mélange 9, il est adressé à une extrudeuse à vis, d'où il sort sous la forme d'un jonc, lequel est ensuite dirigé, de façon connue, vers un dispositif de granulation non représenté.

### EXEMPLES 1 à 21

### Mode Opératoire Général :

On a utilisé l'installation représentée sur la Figure 1.

Les conditions de fonctionnement étaient les suivantes :
- pression HP du réacteur R : telle qu'indiquée dans le Tableau 1 ;
- injection des monomères : comme indiqué dans la description ci-dessus de l'installation avec la répartition suivante :
   t : 1/3 ; m1 : 1/3 ; m2 : 1/3,
- injection de l'initiateur consistant en peroctanoate de tertiobutyle pour les Exemples 1 à 17, peroxyde de ditertiobutyle pour les Exemples 18 à 20 et mélange de perbenzoate de tertiobutyle (60%) et pernéodécanoate de tertiobutyle (40%) pour l'Exemple 21 : comme indiqué dans la description ci-dessus de l'installation, avec la répartition suivante :
   i1 : 60% ; i2 : 20% ; i3 : 20%,
- profil de températures :
   - T1 : 250°C (Exemples 18 à 20) ou 170°C (autres Exemples)
   - T2 : 260°C (Exemples 18 à 20) ou 190°C (autres Exemples) ; et
   - T3 : 275°C (Exemples 18 à 20) ou 215°C (autres Exemples).
- débit total des monomères gazeux d'alimentation du réacteur : 200 kg/h ;
- pourcentage du monomère A en % molaire par rapport à la somme éthylène + monomère A ;
- pression régnant dans le séparateur S, P = 250 bars.

On a injecté par la conduite 6 une solution à 250 g/l d'anhydride maléique (monomère B) dans le carbonate de propylène (Exemples 1 à 11) ou dans le carbonate de diéthyle (Exemples 12 à 21), à un débit tel que le pourcentage en poids d'anhydride maléique, injecté par rapport au (co)polymère, indiqué dans le Tableau 1, soit respecté. Un initiateur, également tel qu'indiqué dans le Tableau 1, était présent dans la solution (sauf pour les Exemples 1, 6, 12, 18 et 21). Le rapport massique initiateur/anhydride maléique est également indiqué dans le Tableau 1.

Le Tableau 1 mentionne également la teneur en monomère A du copolymère obtenu (en % en poids), l'indice de fluidité du (co)polymère greffé obtenu, mesuré selon la norme ASTM D1238 condition E, la quantité d'anhydride maléique greffé (exprimée en ppm) ainsi que le taux de greffage.

Le dosage de l'anhydride maléique greffé a été effectué sur l'absorption à 1785 cm⁻¹ de la vibration de valence antisymétrique des groupes carbonyle, en se basant sur un étalonnage réalisé à partir de copolymères éthylène/anhydride maléique et terpolymère éthylène/acrylate de n-butyle/anhydride maléique fabriqués par copolymérisation radicalaire. Le carbonate de propylène (ou le carbonate de diéthyle), et l'anhydride maléique, et les autres matières volatiles, ont été extraits à l'acétone pendant 24 heures ; ce dosage par spectroscopie infrarouge a été réalisé sur film d'épaisseur constante 50 µm. Le taux de greffage représente le rapport de la quantité d'anhydride maléique greffé sur le (co)polymère à la quantité d'anhydride maléique injecté dans la ligne, par rapport à la même quantité de (co)polymère.

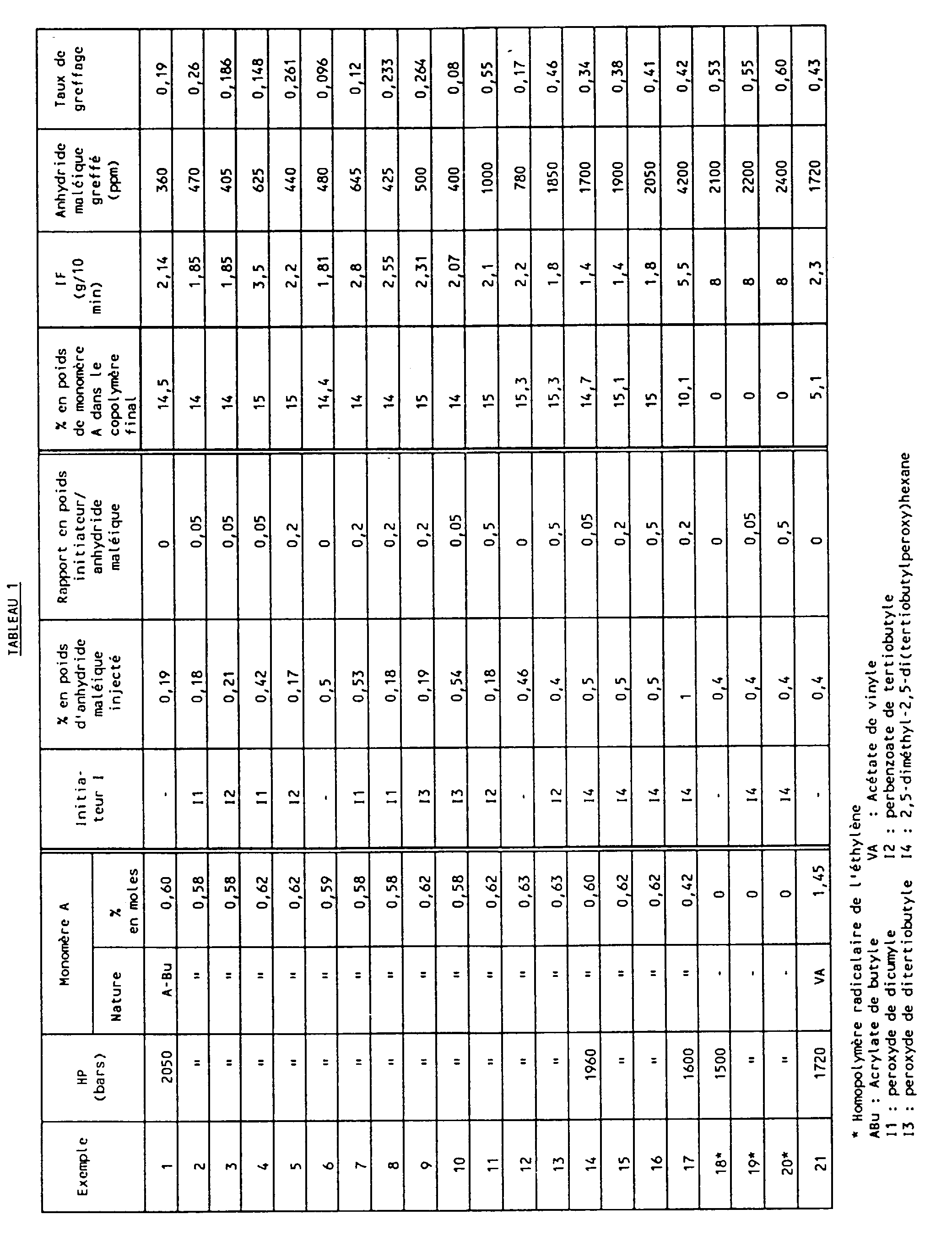

Si l'on se réfère maintenant à la Figure 2, on peut voir que l'on a représenté une installation de fabrication de copolymères greffés de l'éthylène analogue à celle de la Figure 1, à ceci près qu'il est prévu une deuxième zone de séparation S2. Les deux zones de séparation intermédiaires S1 et S2 fonctionnent à respectivement P1 et P2, P1 étant supérieur à P2. On a désigné par des chiffres de référence supérieurs de 10 les conduites associées au deuxième séparateur S2.

On peut injecter le mélange monomère B + solvant + initiateur, ou bien juste avant le pointeau de la vanne 5, comme représenté en trait plein sur la Figure 2. On peut, de la même façon, injecter également le mélange à base de monomère B par la conduite 16 comme représenté en pointillé sur la Figure 2. On peut également n'injecter le mélange à base de monomère B que par la conduite 16.

### EXEMPLE 22

Dans l'installation représentée à la Figure 1 on a copolymérisé en continu un mélange gazeux comprenant 50% en poids d'éthylène et 50% en poids de butène-1, introduit dans le réacteur R au point t. On a également introduit au même point 0,03% en volume d'hydrogène par rapport au mélange gazeux.

Le catalyseur de copolymérisation, comprenant le composé cobroyé TiCl₃, 1/3AlCl₃, 2,5MgCl₂ en suspension dans une coupe d'hydrocarbures saturés en C₁₀-C₁₂, a été introduit au point i1. Il était activé au moyen de triéthylaluminium selon un rapport Al/Ti égal à 10.

Les trois zones du réacteur ont été maintenues à une température de 250°C sous une pression de 800 bars.

Le séparateur S a été maintenu sous une pression de 250 bars ; la trémie basse pression SF a été maintenue sous une pression de 10 bars.

Au moyen de la pompe (7) on a introduit par la conduite (6) une solution contenant, par litre, 250 g d'anhydride maléique et 50 g de 2,2-azobis(acétoxypropane) dans le carbonate de diéthyle. Le débit de cette solution a été tel que 0,15 g d'anhydride maléique étaient introduits pour 100 g de copolymère provenant du séparateur S. Les gaz résiduels issus de la trémie basse pression SF n'ont pas été recyclés dans l'installation de polymérisation.

On a obtenu un copolymère d'éthylène et de butène-1 greffé par 0,05% en poids d'anhydride maléique, ayant une densité de 0,923 et un indice de fluidité IF (mesuré selon la norme ASTM D-1238, condition L) égal à 3,7 g/10 min.

A titre comparatif, en l'absence d'introduction de solution d'anhydride maléique et d'initiateur, on obtient un copolymère d'éthylène et de butène-1 ayant la même densité et un IF égal à 4,5 g/10 min.

## Revendications

1. Procédé de production en continu d'un homopolymère de l'éthylène ou d'un copolymère de l'éthylène et d'au moins un monomère A, ledit homopolymère ou copolymère étant modifié par greffage d'au moins un monomère B choisi parmi les acides carboxyliques à insaturation éthylénique, leurs anhydrides et autres dérivés, caractérisé par le fait que :
- dans un premier stade, on conduit la polymérisation de l'éthylène ou la copolymérisation vraie de l'éthylène et du (ou des) monomère(s) A, en présence d'au moins un amorceur de (co)polymérisation vraie et, le cas échéant, des additifs usuels, dans au moins une zone de réaction (R) maintenue sous une pression HP de 400 à 3000 bars, à une température comprise entre 150° et 320°C;
- dans un second stade,
- ou bien on achemine le produit de réaction dans une zone de séparation (S), maintenue sous une pression intermédiaire P de 50 à 500 bars, dans laquelle le (co)polymère formé est séparé, à l'état fondu, d'avec le (ou les) (co)monomère(s) n'ayant pas réagi ;
- ou bien on achemine le produit de réaction dans une première zone de séparation (S1), maintenue sous une pression intermédiaire P1 de 100 à 500 bars, dans laquelle le (co)polymère formé est séparé, à l'état fondu, d'avec le (ou les) (co)monomère(s) n'ayant pas réagi ; puis on achemine le (co)polymère obtenu dans une deuxième zone de séparation (S2), maintenue sous une pression intermédiaire P2 de 10 à 70 bars, dans laquelle le (co)polymère à l'état fondu, issu de la zone (S1), est séparé d'avec le (ou les) (co)monomère(s) n'ayant pas réagi ; et
- dans un troisième stade, on achemine le (co)polymère obtenu dans une zone de séparation finale (SF), dans laquelle le (co)polymère est séparé d'avec les gaz résiduels et qui est maintenue sous une basse pression BP de 0,5 à 10 bars avec BP < P2 si le second stade est conduit avec deux zones de séparation,
des zones de détente appropriées (D), (D1) et (D2) étant aménagées sur le trajet du (co)polymère entre les zones respectivement (S) et (SF), (S1) et (S2), et (S2) et (SF), le (ou les) monomère(s) B, le cas échéant dissous dans un solvant ou en suspension dans un milieu de dispersion, étant introduits dans la ligne, sur le trajet du (co)polymère, en au moins un point se situant au niveau de la zone de détente (D) ou en au moins un point se situant au niveau d'au moins une zone de détente (D1, D2), le greffage étant par ailleurs conduit, le cas échéant, en présence d'au moins un initiateur de greffage.

2. Procédé selon la revendication 1, caractérisé par le fait qu'on injecte le flux constitué par ou comprenant le (ou les) monomère(s) B en amont de la zone de détente considérée (D ; D1 ; D2), entre le point de détente associé et la sortie de la zone de séparation située juste en amont de celui-ci.

3. Procédé selon l'une des revendications 1 ou 2, caractérisé par le fait qu'on injecte le flux constitué par ou comprenant le (ou les) monomère(s) B en aval de la zone de détente considérée (D ; D1 ; D2), au voisinage du point de détente associé.

4. Procédé selon l'une des revendications 1 à 3, caractérisé par le fait qu'on conduit le second et le troisième stade à une température comprise entre 150 et 300°C.

5. Procédé selon l'une des revendications 1 à 4, caractérisé par le fait que l'on utilise, comme monomère A, une alpha-oléfine en C₃-C₁₀, permettant de conduire à des copolymères de l'éthylène par voie Ziegler, ou bien un alcanoate de vinyle, un (méth)acrylate d'alkyle en C₁-C₁₂, l'acide (méth)acrylique et le monoxyde de carbone, permettant de conduire à des copolymères polaires de l'éthylène par voie radicalaire.

6. Procédé selon l'une des revendications 1 à 5, caractérisé par le fait qu'on utilise, comme monomères B, l'acide (méth)acrylique, l'acide maléique, l'acide fumarique, l'acide itaconique, l'acide crotonique, l'anhydride itaconique, l'anhydride maléique ou un anhydride maléique substitué, comme l'anhydride diméthyl maléique, un sel, amide, imide et ester d'un acide carboxylique à insaturation éthylénique, comme le maléate mono- et disodique, l'acrylamide, le maléimide et le fumarate de diéthyle.

7. Procédé selon l'une des revendications 1 à 6, caractérisé par le fait qu'on introduit le (ou les) monomère(s) B à l'état dissous dans au moins un solvant choisi parmi le carbonate d'éthylène, le carbonate de propylène, le carbonate de diéthyle et les esters d'acides gras et d'alcools lourds, tels que les acétates de butyle, d'hexyle, d'octyle, ou à l'état dispersé dans un milieu de dispersion, tel que le polyhexène ou une cire ou graisse de polyoléfine, en particulier de polyéthylène, éventuellement avec au moins un solvant, le rapport en poids monomère(s) B/solvant étant compris entre 0,5/1 et 1,5/1, et le rapport en poids monomère(s) B/milieu de dispersion étant compris entre 1/1 et 4/1.

8. Procédé selon la revendication 7, caractérisé par le fait que le flux constitué par ou comprenant le (ou les) monomère(s) B est chauffé de façon à faciliter son injection dans la ligne à une température suffisante mais inférieure à celle qui provoquerait la décomposition de l'initiateur pouvant être utilisé conjointement.

9. Procédé selon l'une des revendications 1 à 8, caractérisé par le fait qu'on utilise, comme initiateur de greffage, un peroxyde et/ou un perester, tel que le peroxyde de dicumyle ou le peroxyde de ditertiobutyle, le perbenzoate de butyle tertiaire, ou le 2,5-diméthyl 2,5-di(tertiobutylperoxy)hexane ou un composé diazoïque.

10. Procédé selon l'une des revendications 1 à 9, caractérisé par le fait qu'on introduit le (ou les) initiateur(s) de greffage dans le flux du (ou des) monomère(s) B injecté dans la ligne de production, et/ou de façon séparée, également dans la ligne, en amont ou en aval du ou d'au moins le premier point d'injection du (ou des) monomère(s) de greffage B.

11. Procédé selon l'une des revendications 1 à 10, caractérisé par le fait qu'on conduit le greffage d'au moins un monomère B sur un copolymère de l'éthylène et d'au moins une alpha-oléfine, préparé en présence d'un système catalytique de type Ziegler, et modifié par mise en présence du copolymère ainsi obtenu avec au moins un initiateur de radicaux libres, ledit (ou lesdits) initiateur(s) de radicaux libres étant introduits dans la ligne, sur le trajet du (co)polymère, en au moins un point compris entre la (ou les) dernière(s) zone(s) réactionnelle(s) d'un réacteur à plusieurs zones ou dans le dernier réacteur d'un ensemble de réacteurs branchés en série et la sortie de la zone de transformation par extrusion et granulation, qui fait suite à la zone de séparation finale, ledit (ou lesdits) initiateur(s) pouvant également être incorporé(s) par malaxage avec les granulés du (co)polymère greffé final.

12. Procédé selon l'une des revendications 1 à 11, caractérisé par le fait qu'on utilise un rapport massique initiateur(s) de greffage/monomère(s) B pouvant aller jusqu'à 1, et une teneur massique en monomère(s) B injecté(s) de 0,05 à 2 parties pour 100 parties du copolymère.

13. Procédé selon l'une des revendications 1 à 12, caractérisé par le fait qu'on met en oeuvre le (ou les) monomère(s) A à raison de 0,1 à 90% en moles par rapport à la somme éthylène + monomère(s) A lors de la fabrication des copolymères polaires d'éthylène et 2 à 90% en moles lors de la fabrication des copolymères d'éthylène et d'α-oléfines.

14. Installation pour la mise en oeuvre du procédé tel que défini à l'une des revendications 1 à 13, caractérisée par le fait qu'elle comprend, en série :
- au moins un réacteur (R) de polymérisation sous haute pression, autoclave ou tubulaire ;
- un séparateur (S) apte à fonctionner sous une pression intermédiaire P ou bien deux séparateurs (S1 ; S2) en série, aptes à fonctionner sous des pressions intermédiaires respectivement P1 et P2, avec P2 < P1 ;
- un séparateur final (SF) basse pression ;
- une extrudeuse (10) ; et
- un dispositif de granulation,
des conduites (1 ; 4 ; 14) de (co)polymère reliant le réacteur (R) et les séparateurs (S ; S1 ; S2 ; SF), des vannes de détente (2 ; 5 ; 15), par exemple à pointeau, étant disposées sur les sorties respectivement du réacteur (R) et des séparateurs (S ; S1 ; S2) séparant les (co)monomère(s) n'ayant pas réagi d'avec le (co)polymère formé ; au moins une conduite (6 ; 16) d'injection du flux constitué par ou comprenant le (ou les) monomère(s) de greffage B et, le cas échéant, au moins un initiateur de greffage, débouchant dans la ligne, dans la ou une zone de détente comportant la vanne de détente associée (2 ; 5 ; 15) ; le cas échéant, au moins une conduite d'injection séparée, dans la ligne, du (ou des) initiateurs de greffage ; le cas échéant, au moins une conduite d'injection séparée dans la ligne, d'au moins un initiateur de radicaux libres en vue de la modification d'un copolymère éthylène-α-oléfine préparé par catalyse Ziegler dans la zone de réaction, en au moins un point compris entre la (ou les) dernière(s) zone(s) réactionnelle(s) d'un réacteur à plusieurs zones ou dans le dernier réacteur d'un ensemble de réacteurs branchés en série et la sortie du dispositif de granulation ; des moyens de pompage (7) étant prévus sur la (ou les) conduite(s) (6 ; 16) pour l'injection du flux de monomère(s) de greffage, et sur la (ou les) conduite(s) pour l'injection séparée, si elle est prévue, du (ou des) initiateur(s) de greffage, et/ou du (ou des) initiateur(s) de radicaux libres en vue de la modification précitée.

15. Installation selon la revendication 14, caractérisée par le fait que la (ou les) conduite(s) d'injection séparée, dans la ligne, du (ou des) initiateur(s) de greffage est (ou sont) positionnée(s) en aval du ou d'au moins le premier point d'injection du (ou des) monomère(s) de greffage B.

## Patentansprüche

1. Verfahren zur kontinuierlichen Herstellung eines Homopolymeren des Ethylens oder eines Copolymeren des Ethylens und mindestens eines Monomeren A, wobei dieses Homopolymere oder Copolymere durch Aufpfropfen mindestens eines Monomeren B, ausgewählt aus ethylenisch ungesättigten Carbonsäuren, ihren Anhydriden und anderen Derivaten, modifiziert ist, dadurch gekennzeichnet, dass man:
- in einem ersten Stadium die Polymerisation des Ethylens oder die echte Copolymerisation des Ethylens und des (oder der) Monomeren A, in Anwesenheit von mindestens einem Starter für eine echte (Co)polymerisation und gegebenenfalls der üblichen Zusätze, in zumindest einer Reaktionszone (R), welche sich unter einem Druck HP von 400 bis 3000 bar befindet, bei einer Temperatur zwischen 150 und 320 °C durchführt;
- in einem zweiten Stadium,
- man entweder das Reaktionsprodukt in eine Trennungszone (S) leitet, welche sich unter einem Zwischendruck P von 50 bis 500 bar befindet, worin das gebildete (Co)polymere in geschmolzenen Zustand von dem (oder den) (Co)monomeren, welche nicht reagiert haben, abgetrennt wird;
- oder man das Reaktionsprodukt in eine erste Trennunngszone (S1) leitet, welche sich unter einem Zwischendruck P1 von 100 bis 500 bar befindet, worin das gebildete (Co)polymere in geschmolzenem Zustand von dem (oder den) (Co)monomeren, welche nicht reagiert haben, abgetrennt wird; man danach das erhaltene (Co)polymere in eine zweite Trennungszone (S2) leitet, welche unter einem Zwischendruck P2 von 10 bis 70 bar gehalten wird, worin das aus der Zone (S1) entnommene (Co)polymere in geschmolzenem Zustand von dem (oder den) (Co)monomeren, welche nicht reagiert haben, abgetrennt wird; und
- man in einem dritten Stadium das erhaltene (Co)polymere in eine Zone der endgültigen Trennung (SF) leitet, in der das (Co)polymere von den Restgasen abgetrennt und welche unter einem niedrigen Druck BP von 0,5 bis 10 bar gehalten wird, mit BP<P2, falls das zweite Stadium mit zwei Trennungszonen durchgeführt wird,
wobei geeignete Entspannungszonen (D), (D1) und (D2) im Weg des (Co)polymeren zwischen den Zonen (S) und (SF), (S1) und (S2) bzw. (S2) und (SF) angeordnet sind, das (oder die) Monomere(n) B, welche gegebenenfalls in einem Lösemittel gelöst oder in einem Dispersionsmedium suspendiert sind, in die Linie auf dem Weg des (Co)polymeren an zumindest einem Ort, welcher sich auf dem Niveau der Entspannungszone (D) befindet, oder an mindestens einem Ort, der sich auf dem Niveau von mindestens einer Entspannungszone (D1, D2) befindet, eingeführt wird (werden) und zudem die Aufpfropfung gegebenenfalls in Anwesenheit von zumindest einem Starter für den Aufpfropfungsvorgang durchgeführt wird.

2. Verfahren gemäss Patentanspruch 1, dadurch gekennzeichnet, dass man den Fluß, welcher aus dem (oder den) Monomeren B besteht oder diese(s) enthält, oberhalb der in Betracht gezogenen Entspannungszone (D; D1; D2) zwischen dem damit verbundenen Entspannungsort und dem Ausgang der Trennungszone, welche sich gerade oberhalb von diesem befindet, injiziert.

3. Verfahren gemäss einem der Patentansprüche 1 oder 2, dadurch gekennzeichnet, dass man den Fluß, welcher aus dem (oder den) Monomeren B besteht oder diese(s) enthält, unterhalb der in Betracht gezogenen Entspannungszone (D; D1; D2), benachbart zu dem damit verbundenen Entspannungsort, injiziert.

4. Verfahren gemäss einem der Patentansprüche 1 bis 3, dadurch gekennzeichnet, dass man das zweite und das dritte Stadium bei einer Temperatur zwischen 150 und 300 °C durchführt.

5. Verfahren gemäss einem der Patentansprüche 1 bis 4, dadurch gekennzeichnet, dass man als Monomeres A ein C₃-C₁₀-alpha-Olefin verwendet, welches die Herstellung von Copolymeren des Ethylens auf dem Wege von Ziegler erlaubt, oder ein Vinylalkanoat, ein C₁-C₁₂-Alkyl(meth)acrylat, (Meth)acrylsäure und Kohlenmonoxid, welche die Herstellung polarer Copolymere des Ethylens auf radikalischem Weg erlauben.

6. Verfahren gemäss einem der Patentansprüche 1 bis 5, dadurch gekennzeichnet, dass man als Monomeres B (Meth)acrylsäure, Maleinsäure, Fumarsäure, Itaconsäure, Crotonsäure, Itaconsäureanhydrid, Maleinsäureanhydrid oder ein substituiertes Maleinsäureanhydrid, wie Dimethylmaleinsäureanhydrid, ein Salz, Amid, Imid und einen Ester einer ethylenisch ungesättigten Carbonsäure, wie Mono- oder Dinatriummaleat, Acrylamid, Maleinimid und Diethylfumarat, verwendet.

7. Verfahren gemäss einem der Patentansprüche 1 bis 6, dadurch gekennzeichnet, dass man das (oder die) Monomere(n) B gelöst in mindestens einem Lösungsmittel, ausgewählt aus Ethylencarbonat, Propylencarbonat, Diethylcarbonat und den Estern von Fettsäuren und schwerflüchtigen Alkoholen, wie Butyl-, Hexyl- oder Octylacetat, oder dispergiert in einem Dispersionsmedium, wie Polyhexen oder einem Polyolefinwachs oder -fett, insbesondere von Polyethylen, gegebenenfalls zusammen mit mindestens einem Lösungsmittel, verwendet, wobei das Gewichtsverhältnis Monomere(s) B/Lösungsmittel zwischen 0,5/1 und 1,5/1 und das Gewichtsverhältnis Monomere(s) B/Dispersionsmedium zwischen 1/1 und 4/1 beträgt.

8. Verfahren gemäss Patentanspruch 7, dadurch gekennzeichnet, das der Fluß, welcher aus dem (oder den) Monomeren B besteht oder diese enthält, in der Weise erhitzt wird, um seine Injektion in die Linie bei einer Temperatur zu erleichtern, die ausreichend ist, sich aber unterhalb derjenigen befindet, welche die Zersetzung des Starters bewirken würde, welcher gleichzeitig verwendet werden kann.

9. Verfahren gemäss einem der Patentansprüche 1 bis 8, dadurch gekennzeichnet, dass man als Aufpfropfungsstarter ein Peroxid und/oder einen Perester, wie Dicumylperoxid oder Ditertiärbutylperoxid, tert. Butylperbenzoat oder 2,5-Dimethyl-2,5-di(tertiärbutylperoxy)hexan oder eine Diazoniumverbindung verwendet.

10. Verfahren gemäss einem der Patentansprüche 1 bis 9, dadurch gekennzeichnet, dass man den (oder die) Aufpfropfungsstarter in den Fluß des (oder der) in die Produktionslinie injizierten Monomeren B einführt und/oder getrennt, ebenfalls in die Linie, oberhalb oder unterhalb oder mindestens am ersten Ort der Injektion des (oder der) Aufpfropfungsmonomere(n) B.

11. Verfahren gemäss einem der Patentansprüche 1 bis 10, dadurch gekennzeichnet, dass man die Aufpfropfung von mindestens einem Monomeren B auf ein Copolymeres von Ethylen und mindestens einem alpha-Olefin durchführt, hergestellt in Anwesenheit eines katalytischen Systems vom Ziegler-Typus und modifiziert durch Kontaktieren des so erhaltenen Copolymeren mit mindestens einem freien Radikalstarter, wobei dieser (oder diese) freien Radikalstarter in die Linie auf dem Weg des (Co)polymeren an mindestens einem Ort zwischen der (oder den) letzten Reaktionzone (n) eines Reaktors mit mehreren Zonen oder in dem letzten Reaktor einer Mehrzahl von in Serie geschalteten Reaktoren und dem Ausgang der Transformationszone durch Extrusion und Granulation, welche sich an die letzte Trennungszone anschliesst, eingetragen wird (werden), wobei dieser (oder diese) Starter ebenfalls durch Verkneten mit dem Granulat des endgültig aufgepfropften (Co)polymeren eingefügt werden können.

12. Verfahren gemäss einem der Patentansprüche 1 bis 11, dadurch gekennzeichnet, dass man ein Massenverhältnis Aufpfropfungsstarter/Monomeres B, welches bis 1 gehen kann, und einen Massenanteil des injizierten Monomeren B von 0,05 bis 2 Teilen für 100 Teile des Copolymeren verwendet.

13. Verfahren gemäss einem der Patentansprüche 1 bis 12, dadurch gekennzeichnet, dass man das (oder die) Monomere(n) A in einem Anteil von 0,1 bis 90 Mol%, bezogen auf die Summe Ethylen + Monomere(s) A, bei der Herstellung von polaren Copolymeren des Ethylens und von 2 bis 90 Mol% bei der Herstellung von Copolymeren von Ethylens und α-Olefinen verwendet.

14. Vorrichtung für die Anwendung des in einem der Patentansprüche 1 bis 13 definierten Verfahrens, dadurch gekennzeichnet, dass dieses in Serie umfasst:
- mindestens einen Hochdruck-Polymerisationsreaktor (R), Autoklav oder Rohrstutzen;
- einen Abscheider (S), welcher geeignet ist, unter einem mittleren Druck (P) zu arbeiten, oder zwei Abscheider (S1, S2) in Serie, welche geeignet sind, unter mittleren Drucken P1 zw.P2 zu arbeiten, mit P2<P1;
- einem Niederdruck-Endabscheider (SF);
- eine Strangpresse (10) und
- eine Granuliereinrichtung
Leitungen (1; 4; 14) für das (Co)polymere, welche den Reaktor (R) und die Abscheider (S; S1; S2; SF) verbinden, Druckminderventile (2; 5; 15), beispielsweise mit Düsennadel, welche an den jeweiligen Ausgängen des Reaktors (R) und der Abscheider (S; S1; S2) angeordnet sind, die die (Co)monomeren, welche nicht reagiert haben, von den gebildeten (Co)polymeren abtrennen; mindestens eine Leitung (6; 16) zur Injektion des Flusses, welcher aus dem (oder den) Aufpfropfungsmonomeren B besteht oder diese(s) enthält, und gegebenenfalls mindestens einem Aufpfropfungsstarter, welcher in die Linie mündet, in die oder eine Entspannungszone, welche das damit verbundene Druckminderventil (2; 5; 15) enthält; gegebenenfalls mindestens eine getrennte Injektionsleitung in die Linie für den (oder die) Aufpfropfungsstarter; gegebenenfalls mindestens eine getrennte Injektionsleitung in die Linie für mindestens einen freien Radikalstarter im Hinblick auf die Modifizierung eines Copolymeren Ethylen-α-Olefin, hergestellt mittels Ziegler-Katalyse in der Reaktionszone, an mindestens einem Ort zwischen der (oder den) letzten Reaktions-zone(n) eines Reaktors mit mehreren Zonen oder in dem letzten Reaktor einer Mehrzahl von in Serie geschalteten Reaktoren und dem Ausgang der Granuliereinrichtung, wobei die Pumpmöglichkeiten (7) in der (oder den) Leitung(en) (6; 16) für die Injektion des Flusses des (der) Aufpfropfungsmonomeren und in der (oder den) Leitung(en) für die getrennte Injektion, falls sie vorgesehen ist, des (oder der) Aufpfropfungsstarter(s) und/oder des (oder der) freien Radikalstarter(s) im Hinblick auf die vorerwähnte Modifikation vorgesehen sind.

15. Vorrichtung gemäss Patentanspruch 14, dadurch gekennzeichnet, dass die Leitung(en) für die getrennte Injektion in der Linie des (oder der) Aufpfropfungsstarter(s) unterhalb vom oder mindestens am ersten Ort der Injektion des (oder der) Aufpfropfungsmonomeren B angeordnet sind.

## Claims

1. Process for the continuous production of an ethylene homopolymer or of a copolymer of ethylene and at least one monomer A, the said homopolymer or copolymer being modified by the grafting of at least one monomer B chosen from carboxylic acids containing an ethylenic unsaturation, their anhydrides and other derivatives, characterised in that :
- in a first step, the polymerisation of ethylene or the true copolymerisation of ethylene and the monomer(s) A is carried out in the presence of at least one true (co)polymerisation initiator and, where appropriate, the customary additives, in at least one reaction zone (R) which is maintained under pressure HP of 400 to 3000 bars, at a temperature of between 150° and 320°C ;
- in a second step,
- either the reaction product is routed into a separation zone (S), maintained under an intermediate pressure P of 50 to 500 bars, in which the (co)polymer formed is separated, in the molten state, from the unreacted (co)monomer(s) ;
- or the reaction product is routed into a first separation zone (S1), which is maintained under an intermediate pressure P1 of 100 to 500 bars, in which the (co)polymer formed is separated, in the molten state, from the unreacted (co)monomer(s) ; then the (co)polymer obtained is routed into a second separation zone (S2), maintained under an intermediate pressure P2 of 10 to 70 bars, in which zone the (co)polymer in the molten state, issuing from zone (S1), is separated from the unreacted (co)monomer(s) ; and
- in a third step, the (co)polymer obtained is routed into a final separation zone (SF), in which zone the (co)polymer is separated from the residual gases, and which is maintained under a low pressure LP of 0.5 to 10 bars with LP < P2 if the second step is carried out with two separation zones, appropriate let-down zones (D), (D1) and (D2) being provided along the path of the (co)polymer between the zones (S) and (SF), (S1) and (S2), and (S2) and (SF) respectively, the monomer(s) B, if appropriate dissolved in a solvent or suspended in a dispersing medium, being introduced on-line, into the path of the (co)polymer, at at least one point located at the level of the let-down zone (D) or at at least one point located at the level of at least one let-down zone (D1, D2), grafting moreover being carried out, if necessary, in the presence of at least one grafting initiator.

2. Process according to Claim 1, characterised in that the flow consisting of or comprising the monomer(s) B is injected upstream of the let-down zone in question (D; D1; D2), between the associated let-down point and the outlet of the separation zone located just upstream of the said let-down point.

3. Process according to either of Claims 1 and 2, characterised in that the flow consisting of or comprising in the monomer(s) B is injected downstream of the let-down zone in question (D; D1; D2), in the vicinity of the associated let-down point.

4. Process according to one of Claims 1 to 3, characterised in that the second and the third steps are carried out at a temperature which is advantageously between 150 and 300°C.

5. Process according to one of Claims 1 to 4, characterised in that the monomer A used is a C₃-C₁₀ alphaolefin, allowing the production of ethylene copolymers by the Ziegler route, or a vinyl alkanoate, a C₁-C₁₂ alkyl (meth)acrylate, (meth)acrylic acid and carbon monoxide, allowing the production of polar ethylene copolymers by the free radical route.

6. Process according to one of Claims 1 to 5, characterised in that the monomers B used are (meth)acrylic acid, maleic acid, fumaric acid, itaconic acid, crotonic acid, itaconic anhydride, maleic anhydride or a substituted maleic anhydride, such as dimethylmaleic anhydride, a salt, amide, imide or ester of a carboxylic acid containing an ethylenic unsaturation, such as monosodium and disodium maleate, acrylamide, maleimide and diethyl fumarate.

7. Process according to one of Claims 1 to 6, characterised in that the monomer(s) B is or are introduced in the form of a solution in at least one solvent chosen from ethylene carbonate, propylene carbonate, diethyl carbonate and the esters of fatty acids and heavy alcohols, such as the butyl, hexyl and octyl acetates, or in the form of a dispersion in a dispersing medium, such as polyhexene or a polyolefin, in particular polyethylene, wax or fat, optionally with at least one solvent, the monomer(s) B/solvent weight ratio being, between 0.5/1 and 1.5/1 and the monomer(s) B/dispersing medium weight ratio being between 1/1 and 4/1.

8. Process according to Claim 7, characterised in that the flow consisting of or comprising the monomer(s) B is heated so as to facilitate its on-line injection at a temperature which is adequate but below that which would give rise to the decomposition of the initiator which may be used conjointly.

9. Process according to one of Claims 1 to 8, characterised in that the grafting initiator used is a peroxide and/or a perester, such as dicumyl peroxide or di-tert-butyl peroxide, tert-butyl perbenzoate or 2,5-dimethyl-2,5-(di-tert-butylperoxy)-hexane or a diazo compound.

10. Process according to one of Claims 1 to 9, characterised in that the grafting initiator(s) is or are introduced into the flow of the monomer(s) B injected into the production line, and/or separately, also on-line, upstream or downstream of the injection point or of at least the first injection point for the grafting monomer(s) B.

11. Process according to one of Claims 1 to 10, characterised in that the grafting of at least one monomer B is carried out onto a copolymer of ethylene and at least one alpha-olefin, which copolymer is prepared in the presence of a catalyst system of the Ziegler type and modified by bringing the copolymer thus obtained into contact with at least one free radical initiator, the said free radical initiator(s) being introduced on-line, into the path of the (co)polymer, at at least one point located between the final reaction zone(s) of a multi-zone reactor, or in the final reactor of a reactor assembly connected in series, and the outlet of the zone for conversion by extrusion and granulation, which follows the final separation zone, it also being possible to incorporate the said initiator(s) by malaxating with the granules of the final graft (co)polymer.

12. Process according to one of Claims 1 to 11, characterised in that a grafting initiator(s)/monomer(s) B weight ratio which may be up to 1 and an injected monomer(s) B content by weight of 0.05 to 2 parts per 100 parts of the copolymer are used.

13. Process according to one of Claims 1 to 12, characterised in that the monomer(s) A is or are used in an amount of from 0.1 to 90 mol% with respect to the sum of ethylene + monomer(s) A, during the production of the polar copolymers of ethylene, and 2 to 90 mol% during the production of copolymers of ethylene and α-olefins.

14. Installation for the implementation of the process as defined in one of Claims 1 to 13, characterised in that it comprises, in series :
- at least one autoclave or tubular polymerisation reactor (R) under high pressure ;
- a separator (S) capable of operating under an intermediate pressure P, or two separators (S1; S2) in series, capable of operating under intermediate pressures P1 and P2 respectively, where P2 < P1 ;
- a low-pressure final separator (SF) ;
- an extruder (10) ; and
- a granulating device,
(co)polymer lines (1; 4; 14) connecting the reactor (R) and the separators (S; S1; S2; SF), let-down valves (2; 5; 15), for example needle valves, being arranged respectively on the outlets of the reactor (R) and the separators (S; S1; S2) separating the unreacted (co)monomer(s) from the (co)polymer formed ; at least one line (6; 16) for injection of the flow consisting of or comprising the grafting monomer(s) B and, where appropriate, at least one grafting initiator opening into the line, in the let-down zone or a let-down zone containing the associated let-down valve (2; 5; 15) ; where appropriate, at least one line for the separate on-line injection of the grafting initiator(s) ; where appropriate, at least one line for the separate on-line injection of at least one free radical initiator with a view to modification of an ethylene/α-olefin copolymer prepared by Ziegler catalysis in the reaction zone, at at least one point located between the final reaction zone(s) of a multi-zone reactor or in the final reactor of a reactor assembly connected in series and the outlet of the granulating device ; pumping means (7) being provided on the line(s) (6; 16) for the injection of the grafting monomer(s) flow and on the line(s) for the separate injection, if this is provided, of the grafting initiator(s) and/or of the free radical initiator(s) with a view to the abovementioned modification.

15. Installation according to Claim 14, characterised in that the line(s) for the separate on-line injection of the grafting initiator(s) is (are) positioned downstream of the injection point, or of at least the first injection point, for the grafting monomer(s) B.
